# EUROPEAN PATENT SPECIFICATION

(11) **EP 2 384 290 B1**
(45) Date of publication and mention of the grant of the patent: **15.07.2015**
(21) Application number: 08875809.9
(22) Date of filing: 30.12.2008
(51) Int. Cl.: B60Q 1/00, B60Q 1/14, B60K 37/06

(54) **LIGHTING CONTROL SYSTEM FOR A MOTOR VEHICLE**
BELEUCHTUNGSSTEUERUNGSSYSTEM FÜR EIN KRAFTFAHRZEUG
SYSTÈME DE COMMANDE D'ÉCLAIRAGE POUR VÉHICULE AUTOMOBILE

(43) Date of publication of application: 09.11.2011
(73) Proprietor: Volvo Lastvagnar AB, 405 08 Göteborg (SE)
(72) Inventor: CRAVE, Philippe, F-69003 Lyon (FR); LONGUEVILLE, François, F-69230 Saint Genis Laval (FR); LAMBERT, Thierry, F-69490 Saint Loup (FR)
(74) Representative: Faucheux, Jérôme
(86) International application number: PCT/IB2008/003806
(87) International publication number: WO 2010/076589

(56) References cited:
- EP-A- 1 995 752
- WO-A-03/034456
- DE-A1- 19 622 493
- DE-A1-102005 023 394
- US-A- 5 773 935

## Description

### Field of the invention

The invention concerns a system for controlling lighting equipment of an automotive vehicle having a plurality of lighting settings.

### Technological background

Traditionally, lighting equipment is controlled by rotary switches or by stalk switches. These switches are mechanical systems which can have a plurality of physical positions corresponding each to a lightning status of the lighting equipment.

Typically, in the case of a rotary switch or of a stalk switch, a first position of the switch denotes an OFF position of the lights; a second position of the switch denotes a parking light ON and a third position denotes low/full beams ON.

The lighting equipment of a motor vehicle also includes front fog lights and rear fog lights.

Modern vehicles can be further equipped with a light sensor that can detect the luminous environment of the vehicle. Based on the information detected by the sensor, a vehicle controller can turn on the vehicle lights to parking lights or low beam, this occurring without any input from the vehicle driver.

This can be confusing for the driver who can see that the lighting equipment is turned on whilst the rotary switch or the stalk switch is on an off position.

Another disadvantage of conventional lighting switches is that the physical position of the switch denotes the status of the lighting equipment. Thus, when a driver turns off his/her vehicle with the lighting equipment set for a first specific condition - for example night time - this lighting configuration adapted for this specific environment is frozen by the actual position of the lighting switch. When the driver gets back to his/her vehicle and turns the main electrical circuit on, the lighting equipment will be switched on with the lighting configuration adapted for the first conditions but not necessarily adapted for the second conditions - for example, day time - that prevail when the driver gets back to the vehicle.

In addition, there can be legal requirements for the low beams to be switched on before the fog lamps can be activated. This means that a driver has to go through the process of moving the lighting switch (whether rotary or stalk) from off to parking status to low beam before being authorized to switch on the fog lamp.

Consequently, the need exists for improvements in vehicle lighting systems which will result in a better user interface, and to insure fail-safe operation.

DE 10 2005 023 394 A1 is an example of a known lighting system and discloses a lighting control device and a method for selecting vehicle lighting functions.

### Summary of the invention

In this technical context, an object of the invention is to improve the control of lighting equipment of a motor vehicle, especially by providing a system that is easier to use.

The invention concerns a lighting control system for a motor vehicle having a controller, a main electrical circuit and external running lights operating in several lighting configurations; the control system includes in combination:
- a manually operable control member freely rotating bidirectionally about at least one axis,
- encoding means connected to the control member converting the rotation of the control member into a signal fed to the controller to activate the vehicle external running lights into one of said several lighting configurations,
- logic means embedded in the controller for storing the said lighting configuration for a preset period of time when the main electrical circuit is turned OFF and for activating the external running lights with the said lighting configuration when the main electrical circuit is turned ON within the said preset period of time.
- an automatic lighting mode wherein a light sensor is connected to the controller configured to activate the vehicle external running lights according to the vehicle environment, the automatic lighting mode being overridden by a rotation of the control member.

The system according to the invention proves to be significantly more user friendly as it makes it possible to control a motor vehicle running lights according to two different modes with however a unique control member. The fact that the control member can freely rotate and therefore has no predefined position in relation to a lighting configuration (i.e. day running lights ON or parking lights ON or low beams ON or high beams ON) makes it possible to disconnect the actual position of the control member and the actual lighting configuration. Thus, the lighting configuration is not bound by the actual position of the control member, unlike conventional switch wherein the position of the switch set the vehicle lighting configuration.

A further advantage of the invention is that operating the control member does not require a visual control. What is required from the driver to control the lighting equipment is one or more rotation of the control member. The control member does not have to be positioned within the visual scope of the driver.

Unlike conventional lighting control system wherein a control member rotates adjacent to a series of illuminated pictograms that indicate the status of the lighting equipment, the inventive lighting control system relies exclusively on rotational input to select an appropriate lighting status without any reference to an initial position or to a final position. Operation of the invention system proves to be significantly easier and more user friendly than conventional system.

In a preferred aspect of the invention, the control member is movable along its central axis between a rest position and a pressed position and includes elastic means that urge the control member into its rest position, the encoding means converting a push action on the control member into a signal fed to the controller that cancels any previous operation triggered by a rotational action on the control member.

This feature of the invention adds a further function to the system by offering a reset function that operates on the same principle as the rotational function i.e. no reference to an initial position or to a final position.

It can be envisaged that the control member is movable along its second actuation movement between a rest position and a pressed position and includes elastic means that urge the control member into its rest position. In an embodiment of the invention, the system further comprises an automatic lighting mode wherein a light sensor is connected to the controller configured to activate the vehicle external running lights according the vehicle environment, the automatic lighting mode being overridden by a rotation of the control member and being reinstated by a manual action on the control member along its second actuation movement towards its pressed position.

The system of the invention is fully compatible with an automatic lighting mode which is common on many vehicles.

In an embodiment of the invention, the external running lights further include at least one additional light controlled by an additional switch whereby an action on the additional switch activates one of said lighting configurations and said additional light.

Preferably, the additional lights comprise front and/or rear fog lights.

As the position of the control member is not linked to the vehicle lighting configuration, the invention makes it possible to jump to a lighting configuration required by, for example, a legal requirement (i.e. low beams have to be ON with fog lights) without having firstly to activate the low beams and secondly having to activate the fog lights.

In a preferred embodiment of the invention, a clockwise rotation of the control member increments the external running lights status.

Further, a counterclockwise rotation of the control member decrements the external running light status.

In concrete term, the rotation angle of the control member triggering an increment or a decrement in the external light status is defined in the range between 10° to 45°.

In a preferred embodiment of the invention, the control member is a manually operable wheel freely rotating along its central axis.

Further, the second actuation movement of the wheel is an axial movement along its central axis.

It can be envisaged that a continuous push action on the wheel commands a further vehicular function.

A continuous push action on the wheel can command headlights tilt angle by rotating the wheel while maintaining the wheel in a pushed state.

In an embodiment of the invention, the controller incorporates a CPU, a Read Only Memory (ROM) and a Random Access Memory (RAM).

### Brief description of the drawings

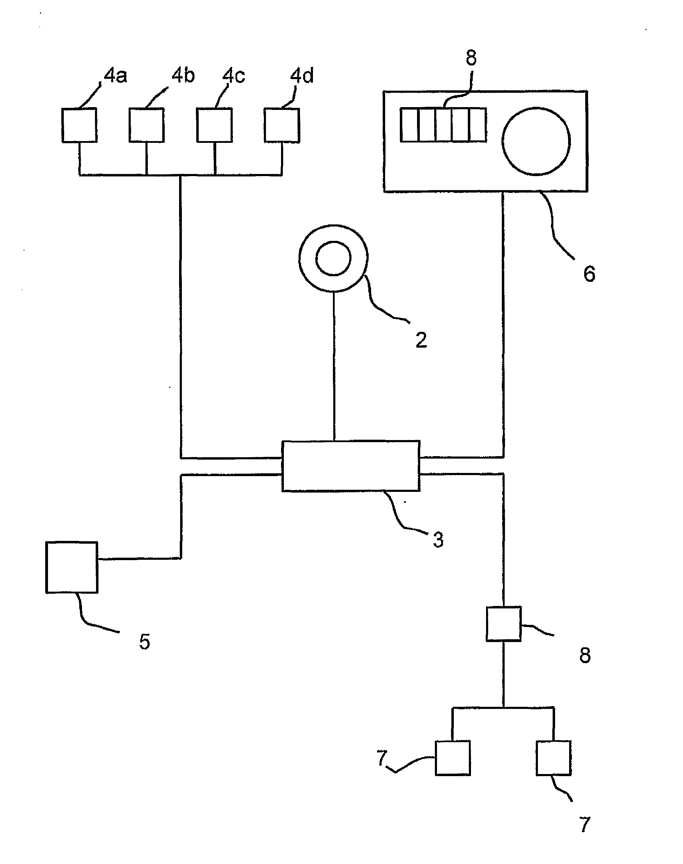

The invention will be described in greater detail in the following, with reference to the embodiments that are shown in the attached drawing in which Fig. 1 is a schematic view of a lighting control system.

### Description of the invention

The lighting control system 1 is part of a motor vehicle that has an engine, an electric power source, a main electrical circuit and external running lights. Conventionally, the external running lights include day running lights, parking lights and headlights. The external running lights can also include additional lights such as front fog lights and rear fog lights.

As schematically illustrated on Figure 1, the lighting control system includes a control member 2 that can freely rotate around at least one axis. The control member 2 is manually rotatable clockwise as well as counterclockwise and it does not have any end positions in terms of rotation. The control member 2 can be suitably positioned on a vehicle dashboard within easy reach from a driver.

The rotation of the control member 2 may be smooth and continuous, but it will preferably be provided with predefined discrete intermediate stop positions.

In one embodiment, the control member can be cylindrical, in the form of a wheel, but it can also be of any other shape which would be convenient for the user.

In one embodiment the control member has a second control movement. This second control movement could be a rotation movement around a second axis. In the shown embodiment, where the control member is a wheel, the second control movement is an axial movement along the axis of its rotation movement. The second movement of the wheel could also be an axial movement along a different axis, for example, an axis perpendicular to the wheel's rotation axis.

In the shown embodiment, in relation to its second control movement, the wheel 2 is constantly pushed towards a rest position by an elastic means such as a spring that is positioned in the axis of the wheel 2 and which pushes said wheel 2 into the rest position after an action is applied on the wheel.

Thus, the wheel 2 does not have any end positions in terms of rotation and the wheel 2 is constantly urged toward its rest position.

Unlike rotary switches of the prior art which rotate with regards to lighting positions that are usually represented by standard pictograms, the wheel 2 is devoid of any marks or references.

Rotations that are transmitted by the user to the wheel 2 are converted into an electric and/or electronic signal by a suitable encoder; the wheel 2 is connected to a controller 3. The controller 3 preferably incorporates a CPU, a ROM (Read Only Memory) and a RAM (Random Access Memory). The controller 3 can also include other conventional components such as an input interface circuit, an output interface circuit, and the like. The CPU can be programmed to control the status of the vehicular running lights 4 for them to operate in different, preferably more than two, predefined lighting configurations.

The different lighting configurations can correspond to:
- switched OFF,
- day running lights 4a ON,
- parking lights 4b ON,
- low beams 4c ON,
- high beams 4d ON.

The different lighting configurations are preferably stored as a list of predefined configurations in the controller.

With the exemplary embodiment, a clockwise rotation or a counterclockwise rotation of the wheel 2 is converted into an activation signal that can be stored in the controller 3. The angular amplitude of the wheel rotation (clockwise or counterclockwise) corresponding to an incrementation of lighting configuration (for example form day running lights to parking lights) may be set according to a vehicle configuration; as an example, an angle of 10° to 45° can materialize a change of configuration. An incremetation of the lighting configuration can be, for example, a change of status of one configuration to the following configuration in the list. When the last configuration in the list is reached, the next configuration may the first configuration in the list.

Optionally, the controller 3 can also be connected to the vehicle audio system; an audio signal can be emitted when the wheel has been rotated according to the preset angular amplitude meaning that that lighting configuration is incremented.

Connected to the lighting controller 3, is a light sensor 5 which detects the lights environment of the vehicle.

This controller 3 is also connected to a display equipment 6 that can include a plurality of standard pictograms 8. The display equipment 8 can be integrated in the vehicle dashboard or can be projected on the vehicle windscreen.

Operation of the lighting control system 1 according to the invention is now explained by non limiting examples.

As explained, the unique user interface is the wheel 2 when an action on the vehicular running lights 4 is required.

When the vehicle main electrical circuit is turned off, the lighting configuration is in its switched off status.

When the vehicle main electrical circuit is turned on, the lighting configuration may remain switched off or may be automatically changed to a day running light configuration if this is a legal requirement. At that stage, no input has been required from the user.

If the user makes the decision that the vehicle environment requires that the parking lights have to be turned on, the wheel 2 is rotated, for example, in a clockwise direction. An audio signal may be emitted to indicate that the lighting configuration has been changed. The corresponding pictogram 8 is activated and appears on the information cluster and/or on the windscreen.

From the above defined lighting configuration, the user may decide that the environment requires that the low beams 4c lights have to be turned on; the wheel 2 is further rotated in a clockwise direction. An audio signal may be emitted to indicate that the lighting configuration has been changed. The corresponding pictogram is activated and appears on the information cluster and/or on the windscreen.

The inventive system proves to be especially advantageous when the vehicle main electrical circuit is turned off.

As above explained, there is no relation between the actual position of the wheel 2 and the lighting status.

Thus, the invention makes it possible to retain in the controller 3 for a certain amount of time the lighting configuration that was selected by the user.

A concrete example can be, for example, the case of a vehicle that is operating at night. The lighting configuration is in this instance low beams/high beams ON.

If the vehicle is stopped by turning off its main electrical circuit for less than a preset period of time, say for example less than an hour, the system makes it possible to store in the controller 3 the lighting status. If the vehcile is turned on again within that period of time, the lighting equipment is activated with the previous setting.The inventive system makes it possible to save within the controller 3, the lighting configuration, and to reinstate it automatically if the vehcile is restarted within a preset period of time. This is based on the assumption that during this preset period of time period of time the vehicle environment remains unchanged. Therefore, the lighting status that was set when the vehicle was turned off is still valid when the vehicle is turned on. Thus, when the user turns off the main electrical circuit, the vehicle running lights will be set to a configuration identical to the configuration that prevailed when the vehicle was turned turned off.

When the vehicle main electrical is turned on for a period of time that exceeds the predefined period, the vehicular running lights are reset to their switched off configuration.

This is possible because the position of the wheel is independent from the actual lighting configuration.

The system according to invention is further fully compatible with a light sensor 5.

When the system incorporates a light sensor 5, the signal from the light sensor 5 commands the lighting configuration of the running lights. This is known an automatic light setting. Depending on the external light and on the signal from the light sensor 5, the controller 3 activates or deactivates the running lights without any input from the user.

In a refined embodiment of the invention, a rotation of the wheel overrides the information coming form the light sensor. For example, if the vehicle is configured with the headlights ON from a signal coming from the light sensor, a rotation of the wheel deactivates the automatic light setting; and sets a new configuration according to that chosen by the user. For example, the user may force that the headlights remains ON whatever the external environment is.

A push on the wheel cancels any previous actions of the wheel; thus, the automatic light setting is reinstated.

The system according to the invention proves also to be advantageous when it comes to activate any additional light such as fog lights 7 operated by an additional switch 8.

In many states, it is a legal requirement to activate the fog lights 7 only when the low beams 4c are ON.

In a case wherein low beams are already ON, an action on a fog light switch 8 activates the fog lights 7.

In a case when the low beams are OFF, an action on the fog light switch activates the low beams and the fog lights, thus saving the usual operations consisting in setting the low beams and when the low beams are activated, setting the fog lights.

The above described function making it possible to save a lighting configuration for a preset period of time is fully applicable to control the fog lights.

It should be understood that the invention is not restricted to the embodiment described above by way of non-limiting example, but on the contrary it encompasses all embodiments thereof.

## Claims

1. A lighting control system for a motor vehicle having a controller (3), a main electrical circuit and external running lights operating in several lighting configurations, said control system includes in combination:
- a manually operable control member (2) freely rotating bidirectionally about at least one axis,
- encoding means connected to the control member (2) converting the rotation of the control member (2) into a signal fed to the controller (3) to activate the vehicle external running lights into one of said several lighting configurations,
- logic means embedded in the controller (3) for storing the said lighting configuration for a preset period of time when the main electrical circuit is turned OFF and for activating the external running lights with the said lighting configuration when the main electrical circuit is turned ON within the said preset period of time,
**characterized in that** said control system further includes:
- an automatic lighting mode wherein a light sensor is connected to the controller (3) configured to activate the vehicle external running lights according to the vehicle environment, the automatic lighting mode being overridden by a rotation of the control member (2).

2. The lighting control system according to claim 1, **characterized in that** the control member (2) is movable according to a second actuation movement, the encoding means converting a manual action on the control member (2) according to the said second actuation movement, into a signal fed to the controller (3) that cancels any previous operation triggered by a rotational action on the control member (2).

3. The lighting control system according to claim 2, **characterized in that** control member (2) is movable along its second actuation movement between a rest position and a pressed position and includes elastic means that urge the control member (2) into its rest position.

4. The lighting control system according to one of claims 2 or 3, **characterized in that** the automatic lighting mode is reinstated by a manual action on the control member (2) along its second actuation movement towards its pressed position.

5. The lighting control system according to one claims 1 to 4, **characterized in that** the external running lights further include at least one additional light controlled by an additional switch whereby an action on the additional switch activates one of said lighting configurations and said additional light.

6. The lighting control system according to claim 5, **characterized in that** the additional lights comprise front and/or rear fog lights.

7. The lighting control system according to one of claims 1 to 6, **characterized in that** a clockwise rotation of the control member (2) increments the external running lights status.

8. The lighting control system according to one of claims 1 to 7, **characterized in that** a counterclockwise rotation of the control member (2) decrements the external running light status.

9. The lighting control system according to claim 7 or 8, **characterized in that** the rotation angle of the control member (2) triggering an increment or a decrement in the external light status is defined in the range between 10° to 45°.

10. The lighting control system according to one of claims 1 to 9, **characterized in** the control member is a manually operable wheel freely rotating along its central axis.

11. The lighting control system according to claim 2 or one of claims 3 to 10 in combination with claim 2, **characterized in that** the second actuation movement of the wheel is an axial movement along its central axis.

12. The lighting control system according to claim 2 or one of claims 3 to 11 in combination with claim 2, **characterized in that** a continuous action on the control member (2) along its second actuation movement commands a further vehicular function.

13. The lighting control system according to claim 12, **characterized in that** a continuous push action on the wheel commands headlights tilt angle by rotating the wheel while maintaining the wheel in a pushed state.

14. The lighting control system according to one of claims 1 to 13, characterized the controller (3) incorporates a CPU, a ROM (Read Only Memory) and a RAM (Random Access Memory).

## Patentansprüche

1. Beleuchtungssteuersystem für ein Kraftfahrzeug mit einer Steuereinrichtung (3), einem elektrischen Hauptkreis und äußeren Fahrlichtern, die in verschiedenen Beleuchtungskonfigurationen betrieben werden, wobei das Steuersystem in Kombination aufweist:
- ein von Hand betätigbares Steuerelement (2), das um wenigstens eine Achse in zwei Richtungen frei dreht,
- eine mit dem Steuerelement (2) verbundene Codiereinrichtung, die die Drehung des Steuerelements (2) in ein der Steuereinrichtung (3) zugeführtes Signal umwandelt, um die externen Fahrlichter des Fahrzeugs in einer der verschiedenen Beleuchtungskonfigurationen zu aktivieren,
- eine in die Steuereinrichtung (3) eingebaute Logikeinrichtung zur Speicherung der Beleuchtungskonfiguration für einen vorherbestimmten Zeitabschnitt, wenn der elektrische Hauptkreis auf AUS geschaltet ist, und zur Aktivierung der äußeren Fahrlichter mit der Beleuchtungskonfiguration, wenn der elektrische Hauptkreis innerhalb des vorherbestimmten Zeitabschnitts auf AN geschaltet ist,
**dadurch gekennzeichnet, dass** das Steuersystem außerdem aufweist:
- einen automatischen Beleuchtungsmodus, in dem ein Lichtsensor mit der Steuereinrichtung (3) verbunden ist, der zur Aktivierung der äußeren Fahrlichter des Fahrzeugs gemäß der Fahrzeugumgebung konfiguriert ist, wobei der automatische Beleuchtungsmodus durch eine Drehung des Steuerelements (2) aufgehoben wird.

2. Beleuchtungssteuersystem nach Anspruch 1, **dadurch gekennzeichnet, dass** das Steuerelement (2) gemäß einer zweiten Betätigungsbewegung bewegbar ist, wobei die Codiereinrichtung eine manuelle Bedienung des Steuerelements (2) gemäß der zweiten Betätigungsbewegung in ein der Steuereinrichtung (3) zugeführtes Signal umwandelt, das jeden vorangegangenen Betrieb aufhebt, der durch eine Drehbetätigung des Steuerelements (2) ausgelöst wurde.

3. Beleuchtungssteuersystem nach Anspruch 2, **dadurch gekennzeichnet, dass** das Steuerelement (2) entlang seiner zweiten Betätigungsbewegung zwischen einer Ruheposition und einer gedrückten Position bewegbar ist und eine elastische Einrichtung umfasst, die das Steuerelement (2) in ihre Ruheposition drängt.

4. Beleuchtungssteuersystem nach einem der Ansprüche 2 oder 3, **dadurch gekennzeichnet, dass** der automatische Beleuchtungsmodus durch eine manuelle Bedienung des Steuerelements (2) entlang seiner zweiten Betätigungsbewegung in Richtung seiner gedrückten Position wiederhergestellt wird.

5. Beleuchtungssteuersystem nach einem der Ansprüche 1 bis 4, **dadurch gekennzeichnet, dass** die äußeren Fahrlichter außerdem wenigstens ein zusätzliches Licht umfassen, dass durch einen zusätzlichen Schalter gesteuert wird, wobei eine Bedienung des zusätzlichen Schalters eines von den Beleuchtungskonfigurationen und dem zusätzlichen Licht aktiviert.

6. Beleuchtungssteuersystem nach Anspruch 5, **dadurch gekennzeichnet, dass** die die zusätzlichen Lichter vordere und/oder hintere Nebelleuchten umfassen.

7. Beleuchtungssteuersystem nach einem der Ansprüche 1 bis 6, **dadurch gekennzeichnet, dass** eine Drehung des Steuerelements (2) in Uhrzeigerrichtung den Status der äußeren Fahrlichter erhöht.

8. Beleuchtungssteuersystem nach einem der Ansprüche 1 bis 7, **dadurch gekennzeichnet, dass** eine Drehung des Steuerelements (2) gegen die Uhrzeigerrichtung den Status des äußeren Fahrlichts verringert.

9. Beleuchtungssteuersystem nach Anspruch 7 oder 8, **dadurch gekennzeichnet, dass** der Drehwinkel des Steuerelements (2), der eine Erhöhung oder eine Verringerung des Status des äußeren Lichts auslöst, in dem Bereich zwischen 10° bis 45° begrenzt ist.

10. Beleuchtungssteuersystem nach einem der Ansprüche 1 bis 9, **dadurch gekennzeichnet, dass** das Steuerelement ein manuell betätigbares Rad ist, das frei entlang seiner Mittelachse dreht.

11. Beleuchtungssteuersystem nach Anspruch 2 oder einem der Ansprüche 3 bis 10 in Kombination mit Anspruch 2, **dadurch gekennzeichnet, dass** die zweite Betätigungsbewegung des Rades eine Axialbewegung entlang seiner Mittelachse ist.

12. Beleuchtungssteuersystem nach Anspruch 2 oder einem der Ansprüche 3 bis 11 in Kombination mit Anspruch 2, **dadurch gekennzeichnet, dass** eine fortlaufende Bedienung des Steuerelements (2) entlang seiner zweiten Betätigungsbewegung eine weitere Fahrzeugfunktion anordnet.

13. Beleuchtungssteuersystem nach Anspruch 12, **dadurch gekennzeichnet, dass** eine fortlaufende Druckbetätigung an dem Rad einen Neigungswinkel der Hauptscheinwerfer durch Drehung des Rades anordnet, während das Rad in einem gedrückten Zustand gehalten wird.

14. Beleuchtungssteuersystem nach einem der Ansprüche 1 bis 13, **dadurch gekennzeichnet, dass** die Steuereinrichtung (3) eine CPU, ein ROM (Read Only Memory) und ein RAM (Random Access Memory) umfasst.

## Revendications

1. Système de commande d'éclairage pour un véhicule motorisé comprenant un contrôleur (3), un circuit électrique principal et des feux de circulation externes fonctionnant dans plusieurs configurations d'éclairage, ledit système de commande comprenant la combinaison d'éléments ci-après :
- un élément de commande (2) utilisable manuellement qui tourne librement dans les deux sens autour d'au moins un axe,
- des moyens de codage reliés à l'élément de commande (2) qui convertissent la rotation de l'élément de commande (2) en un signal acheminé au contrôleur (3) afin d'activer les feux de circulation externes du véhicule dans l'une desdites plusieurs configurations d'éclairage,
- des moyens logiques intégrés dans le contrôleur (3) pour stocker ladite configuration d'éclairage pendant une période prédéfinie lorsque le circuit électrique principal est mis hors circuit et pour activer les feux de circulation externes avec ladite configuration d'éclairage lorsque le circuit électrique principal est mis en circuit au sein de ladite période prédéfinie,
**caractérisé en ce que** ledit système de commande comprend en outre :
- un mode d'éclairage automatique dans lequel un capteur de lumière est raccordé au contrôleur (3) et configuré pour activer les feux de circulation externes du véhicule en fonction de l'environnement du véhicule, le mode d'éclairage automatique étant annulé par une rotation de l'élément de commande (2).

2. Système de commande d'éclairage selon la revendication 1, **caractérisé en ce que** l'élément de commande (2) peut être déplacé conformément à un deuxième mouvement d'actionnement, les moyens de codage convertissant une action manuelle sur l'élément de commande (2) conformément audit deuxième mouvement d'actionnement en un signal acheminé au contrôleur (3) qui annule toute opération précédente déclenchée par une action rotative sur l'élément de commande (2).

3. Système de commande d'éclairage selon la revendication 2, **caractérisé en ce que** l'élément de commande (2) peut être déplacé le long de son deuxième mouvement d'actionnement entre une position de repos et une position enfoncée et inclut des moyens élastiques qui forcent l'élément de commande (2) à entrer dans sa position de repos.

4. Système de commande d'éclairage selon l'une des revendications 2 et 3, **caractérisé en ce que** le mode d'éclairage automatique est rétabli par une action manuelle sur l'élément de commande (2) le long de son deuxième mouvement d'actionnement en direction de sa position enfoncée.

5. Système de commande d'éclairage selon l'une des revendications 1 à 4, **caractérisé en ce que** les feux de circulation externes comprennent en outre au moins un feu supplémentaire commandé par un commutateur supplémentaire, une action sur le commutateur supplémentaire activant l'une desdites configurations d'éclairage et ledit feu supplémentaire.

6. Système de commande d'éclairage selon la revendication 5, **caractérisé en ce que** les feux supplémentaires comprennent des feux de brouillard avant et/ou arrière.

7. Système de commande d'éclairage selon l'une des revendications 1 à 6, **caractérisé en ce qu'**une rotation dans le sens des aiguilles d'une montre de l'élément de commande (2) incrémente l'état des feux de circulation externes.

8. Système de commande d'éclairage selon l'une des revendications 1 à 7, **caractérisé en ce qu'**une rotation dans le sens inverse des aiguilles d'une montre de l'élément de commande (2) décrémente l'état des feux de circulation externes.

9. Système de commande d'éclairage selon la revendication 7 ou 8, **caractérisé en ce que** l'angle de rotation de l'élément de commande (2) qui déclenche un incrément ou un décrément dans l'état des feux de circulation externes est défini dans la plage allant de 10° à 45°.

10. Système de commande d'éclairage selon l'une des revendications 1 à 9, **caractérisé en ce que** l'élément de commande est un volant utilisable manuellement qui tourne librement autour de son axe central.

11. Système de commande d'éclairage selon la revendication 2 ou l'une des revendications 3 à 10 en combinaison avec la revendication 2, **caractérisé en ce que** le deuxième mouvement d'actionnement du volant est un mouvement axial le long de son axe central.

12. Système de commande d'éclairage selon la revendication 2 ou l'une des revendications 3 à 11 en combinaison avec la revendication 2, **caractérisé en ce qu'**une action continue sur l'élément de commande (2) le long de son deuxième mouvement d'actionnement commande une fonction supplémentaire du véhicule.

13. Système de commande d'éclairage selon la revendication 12, **caractérisé en ce qu'**une action de poussée continue sur le volant commande l'angle de rotation des phares en faisant tourner le volant tout en maintenant le volant dans une position enfoncée.

14. Système de commande d'éclairage selon l'une des revendications 1 à 13, **caractérisé en ce que** le contrôleur (3) comprend une CPU, une ROM (mémoire morte) et une RAM (mémoire vive).
